# EUROPEAN PATENT APPLICATION

(11) **EP 2 966 614 A1**
(43) Date of publication of application: **13.01.2016**
(21) Application number: 14759830.4
(22) Date of filing: 08.01.2014
(51) Int. Cl.: G06T 7/00, G06T 1/00

(54) **FINGERPRINT IMAGE CONVERSION DEVICE, FINGERPRINT IMAGE CONVERSION SYSTEM, FINGERPRINT IMAGE CONVERSION METHOD, AND FINGERPRINT IMAGE CONVERSION PROGRAM**

(30) Priority: 06.03.2013 JP 2013044210
(71) Applicant: NEC Corporation, Tokyo 108-8001 (JP)
(72) Inventor: SAKAMOTO, Shizuo, Tokyo 108-8001 (JP)
(74) Representative: Betten & Resch
(86) International application number: PCT/JP2014/000039
(87) International publication number: WO 2014/136369

(57) **Abstract**

A fingerprint image conversion device includes image conversion means 13 for acquiring a three-dimensional image of a finger, and converting the three-dimensional image into a two-dimensional image with a fingerprint portion of the finger being spread.

## Description

### Technical Field

The present invention relates to a fingerprint image conversion device, fingerprint image conversion system, fingerprint image conversion method, and fingerprint image conversion program for converting the format of fingerprint images.

### Background Art

A typical fingerprinting method is, for example, a method of acquiring a fingerprint as a two-dimensional image by capturing an image of a finger pressed on a flat glass plate called a platen from the back side. There are two main methods of fingerprinting: a method of capturing a fingerprint image with the person to be fingerprinted simply pressing his or her finger pad on the platen; and a method of taking a whole fingerprint with the person rolling his or her finger about 180 degrees from one side to the other side on the platen. A two-dimensional image of a fingerprint taken by the latter method is hereafter referred to as a two-dimensional rolled fingerprint.

For example, only a two-dimensional fingerprint can be acquired from a fingerprint left at a crime scene in a criminal investigation or the like. To enable matching irrespective of which part of the fingerprint has been left, two-dimensional rolled fingerprints are employed. When taking a two-dimensional rolled fingerprint, however, the finger may slip as the person cannot roll the finger properly, or soft tissue such as skin may deform significantly as the person presses the finger onto the platen with an excessive force. This results in problems such as the features of the fingerprint being unrecognizable, the fingerprint being displaced, and a matching failure. The assistance of an expert skilled in two-dimensional rolled fingerprinting is therefore required.

In view of this, there is a technique of taking a fingerprint as a three-dimensional image. For example,

Patent Literatures (PTLs) 1 and 2 each disclose a technique of taking a fingerprint as a three-dimensional image by a 3D scanner and thus acquiring the whole fingerprint.

### Citation List

### Patent Literatures

PTL 1: United States Patent Application Publication No. 2006/0045316
PTL 2: United States Patent Application Publication No. 2006/0233427

### Summary of Invention

### Technical Problem

In the case of taking a fingerprint as a three-dimensional image, information of the whole fingerprint can be obtained, but a problem of being unable to directly compare the fingerprint with the acquired two-dimensional left fingerprint arises.

The present invention accordingly has an object of providing a fingerprint image conversion device, fingerprint image conversion system, fingerprint image conversion method, and fingerprint image conversion program that enable a fingerprint taken as a three-dimensional image to be compared with a two-dimensional fingerprint.

### Solution to Problem

A fingerprint image conversion device according to the present invention includes image conversion means for acquiring a three-dimensional image of a finger, and converting the three-dimensional image into a two-dimensional image with a fingerprint portion of the finger being spread.

A fingerprint image conversion system according to the present invention includes: the fingerprint image conversion device; output means for displaying the two-dimensional image obtained by the conversion; and comparison means for comparing the two-dimensional image with a two-dimensional fingerprint image to be compared.

A fingerprint image conversion method according to the present invention includes inputting a three-dimensional image of a finger, and converting the three-dimensional image into a two-dimensional image with a fingerprint portion of the finger being spread.

A fingerprint image conversion program according to the present invention causes a computer to execute a two-dimensional image generation process of inputting a three-dimensional image of a finger, and converting the three-dimensional image into a two-dimensional image with a fingerprint portion of the finger being spread.

### Advantageous Effects of Invention

According to the present invention, a fingerprint taken as a three-dimensional image can be compared with a two-dimensional fingerprint.

### Brief Description of Drawings

[Fig. 1] It is a block diagram depicting the structure of a first exemplary embodiment of a fingerprint image conversion device according to the present invention.
[Fig. 2] It is a flowchart depicting the operation of the first exemplary embodiment of the fingerprint image conversion device according to the present invention.
[Fig. 3] It is an explanatory diagram depicting a fingerprint imaging situation.
[Fig. 4] It is an explanatory diagram depicting a two-dimensional image with a fingerprint portion being spread.
[Fig. 5] It is an explanatory diagram depicting an example of a fingerprint cutting method for a three-dimensional image of a finger.
[Fig. 6] It is an explanatory diagram depicting another example of a fingerprint cutting method for a three-dimensional image of a finger.
[Fig. 7] It is an explanatory diagram depicting an image of shaping a two-dimensional image.
[Fig. 8] It is an explanatory diagram depicting a shaped two-dimensional image including a fingerprint portion.
[Fig. 9] It is an explanatory diagram depicting a two-dimensional image of a shape that is concave around the center on the fingertip side.
[Fig. 10] It is a partial sectional view of a fingerprint portion of a finger.
[Fig. 11] It is an explanatory diagram depicting part of a fingerprint of a shaded two-dimensional image.
[Fig. 12] It is a block diagram depicting the structure of a second exemplary embodiment of a fingerprint image conversion system according to the present invention.
[Fig. 13] It is a flowchart depicting the operation of the second exemplary embodiment of the fingerprint image conversion system according to the present invention.
[Fig. 14] It is a block diagram depicting the structure of a main part of a fingerprint image conversion device according to the present invention.

### Description of Embodiments

### Exemplary Embodiment 1

The following describes a first exemplary embodiment (Exemplary Embodiment 1) of a fingerprint image conversion device according to the present invention, with reference to drawings.

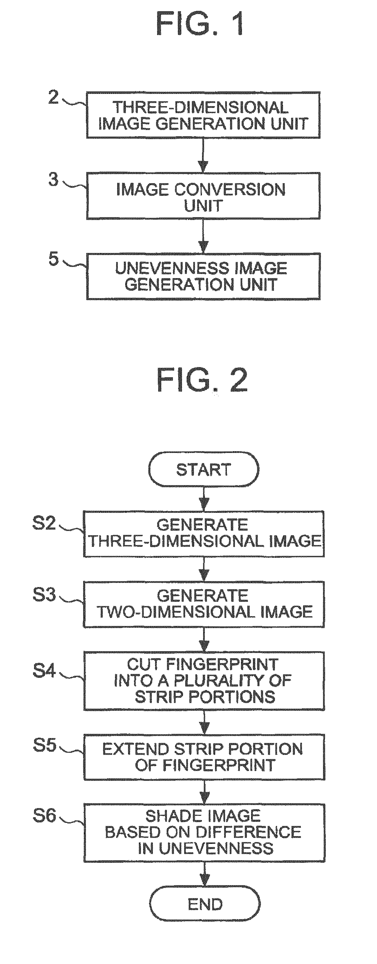

Fig. 1 is a block diagram depicting the structure of the fingerprint image conversion device in the first exemplary embodiment. As depicted in Fig. 1, the fingerprint image conversion device in this exemplary embodiment includes a three-dimensional image generation unit 2, an image conversion unit 3, and an unevenness image generation unit 5. The three-dimensional image generation unit 2, the image conversion unit 3, and the unevenness image generation unit 5 are, for example, realized by an information processing device such as a CPU (Central Processing Unit) operating according to a program or hardware designed to perform specific computational processing and the like.

The three-dimensional image generation unit 2 acquires three-dimensional image information from a 3D scanner or the like that has captured an image of a finger to be input, and generates a three-dimensional image. The three-dimensional image is an image indicating the three-dimensional shape of the finger to be input, where the three-dimensional coordinate values are expressed by a triangular mesh as an example. The three-dimensional image may be provided with a texture representation of an object surface, such as a texture image.

The image conversion unit 3 acquires the three-dimensional image of the finger including the fingerprint, and converts the three-dimensional image into a two-dimensional image with the fingerprint portion of the finger being spread.

The image conversion unit 3 also shapes the converted two-dimensional image into a two-dimensional image of a predetermined shape. In detail, the image conversion unit 3 first cuts the fingerprint of the finger to be input, into a plurality of strip portions. The image conversion unit 3 then extends each strip portion using an extension rate that differs between the strip portions. The extension rate is set according to the target two-dimensional shape after the image spreading.

The unevenness image generation unit 5 shades the image output from the image conversion unit 3, based on the differences in unevenness of the three-dimensional shape. In detail, the unevenness image generation unit 5 determines the density of shading depending on the height of the unevenness of the finger surface from a reference point, and shades the image output from the image conversion unit 3 accordingly.

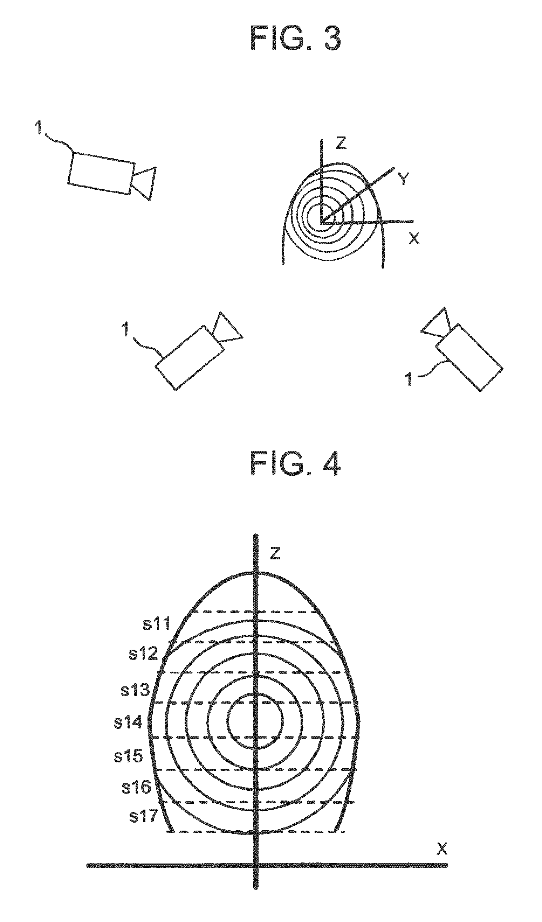

The following describes the operation of the fingerprint image conversion device in this exemplary embodiment. Fig. 2 is a flowchart depicting the operation of the fingerprint image conversion device in the first exemplary embodiment. Fig. 3 is an explanatory diagram depicting a fingerprint imaging situation. As depicted in Fig. 3, for example, three 3D scanners capture an image of a finger from a plurality of directions.

The three-dimensional image generation unit 2 acquires three-dimensional image information from, for example, the 3D scanners that have captured the image of the finger to be input, and generates a three-dimensional image (step S2). The three-dimensional image is an image indicating the three-dimensional shape of the finger to be input, and is expressed by a triangular mesh as an example. The three-dimensional image may be provided with a texture representation and the like.

The image conversion unit 3 acquires the three-dimensional image of the finger including the fingerprint, and converts the three-dimensional image into a two-dimensional image with the fingerprint portion of the finger being spread (step S3). As the method of converting the three-dimensional image into the two-dimensional image, various methods are available. For example, in the case where the three-dimensional coordinate values of the three-dimensional image are expressed by a triangular mesh, the image conversion unit 3 sets a given axis in the longitudinal direction of the finger, and converts the three-dimensional coordinate values in each line and each position on the triangles constituting the mesh to two-dimensionally coordinate values, about the axis. In the case where the three-dimensional image also includes a texture, the image conversion unit 3 converts the texture value corresponding to each position to two-dimensionally coordinate value. In the case where both values are present, the image conversion unit 3 may convert both values.

As an alternative, the image conversion unit 3 may arrange a figure such as a cylinder or a cone around the three-dimensional image, and set a given axis in the longitudinal direction of the finger. The image conversion unit 3 may then project the three-dimensional image onto the figure such as the cylinder or the cone about the axis, and spread the figure to generate the two-dimensional image.

As another alternative, the image conversion unit 3 may generate the two-dimensional image by the spreading method of projecting the three-dimensional image from the center point onto a cylinder as in Mercator projection. In the case where such a method is used, however, the extension rate in both the X-axis direction and the Z-axis direction is significantly different between a point near the equator and a point far from the equator, and adjustment is difficult. Fingerprint matching utilizes feature points, and so coordinate values are important. If this spread two-dimensional image is used, the coordinate values of the spread two-dimensional image significantly deviate from the coordinate values of a typical two-dimensional rolled fingerprint, leading to lower matching accuracy. In particular, since this method also involves extension in the Z-axis direction, a contraction process is needed in the below-mentioned image shaping process. Hence, the image conversion unit 3 preferably uses the above-mentioned method of spreading the mesh or method of projection about the axis, in order to avoid extension in the Z-axis direction in the two-dimensional image generation process.

The two-dimensional image spread in this way may be, however, different from a typical two-dimensional rolled fingerprint shape. Thus, there is a problem in that such a two-dimensional image is hard to be used in operations in which two-dimensional rolled fingerprints are also visually checked. There is also a problem in that, since a fingerprint authentication algorithm is often configured to facilitate comparison with two-dimensional rolled fingerprints, accuracy may be lower than that of a typical authentication method.

The image conversion unit 3 shapes the converted two-dimensional image into a two-dimensional image of a predetermined shape (the shape of two-dimensional rolled fingerprint used by the user of fingerprint authentication). In detail, the image conversion unit 3 first cuts the fingerprint portion on the surface of the finger to be input, into a plurality of strip portions (step S4). Fig. 4 is an explanatory diagram depicting the two-dimensional image with the fingerprint portion being spread. In Fig. 4, the Z axis is the axis set in the longitudinal direction of the finger, and passes through approximately the center part of the finger as an example. The X axis is the axis orthogonal to the Z axis, and passes through the lower end of the fingerprint portion as an example. In the example depicted in Fig. 4, the image conversion unit 3 cuts the two-dimensional image substantially in parallel with the X axis, to divide the fingerprint portion into seven strip portions s11 to s17.

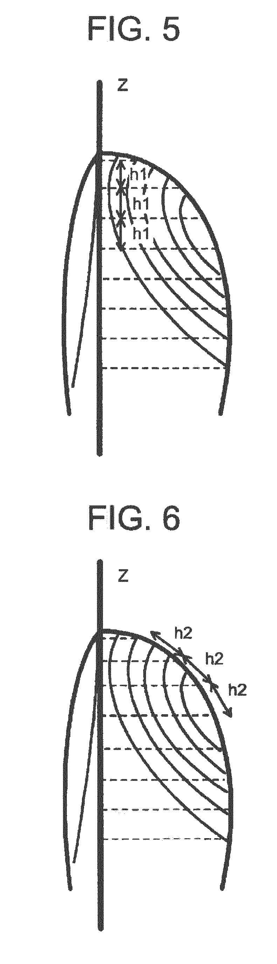

An example of the method of setting the length of each strip portion in the Z-axis direction is described below. Fig. 5 is an explanatory diagram depicting an example of the fingerprint cutting method for the three-dimensional image of the finger. Fig. 6 is an explanatory diagram depicting another example of the fingerprint cutting method for the three-dimensional image of the finger. In the example depicted in Fig. 5, the image conversion unit 3 cuts the two-dimensional image of the finger into strip portions, at regular intervals h1 in the Z-axis direction. In the example depicted in Fig. 6, the image conversion unit 3 cuts the two-dimensional image of the finger into strip portions, at regular intervals h2 on the surface of the finger.

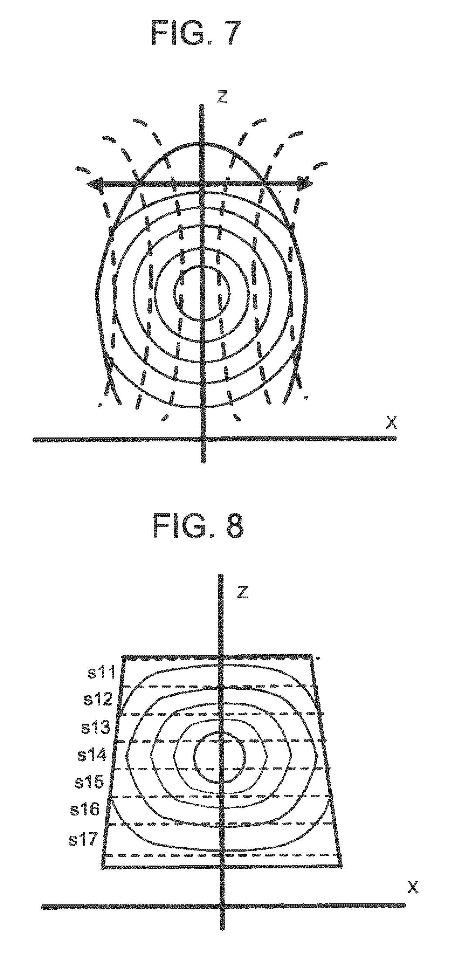

The image conversion unit 3 then performs a shaping process of extending each strip portion of the cut fingerprint portion (step S5). Fig. 7 is an explanatory diagram depicting an image of shaping the two-dimensional image. In Fig. 7, the dotted lines indicate the magnitudes of the extension rates in the X-axis direction of the two-dimensional image. As depicted in Fig. 7, the two-dimensional image before the shaping has a shape that is particularly thin on the fingertip side in the Z-axis direction. Since two-dimensional rolled fingerprints tend to be in the shape of a trapezoid or a rectangle, the two-dimensional image needs to be extended in the X-axis direction especially on the fingertip side.

In detail, the image conversion unit 3 sets a different extension rate for each strip portion, and extends the strip portion. The extension rate is set according to the target predetermined two-dimensional shape (the shape of two-dimensional rolled fingerprint used by the user of fingerprint authentication). The shaping process of extending each strip portion by the image conversion unit 3 is described in detail below, with reference to drawings.

Fig. 8 is an explanatory diagram depicting the shaped two-dimensional image including the fingerprint portion. The two-dimensional image depicted in Fig. 8 is the extended two-dimensional image in the case where a trapezoid is selected as the target two-dimensional shape. The image conversion unit 3 extends each strip portion in the X-axis direction using the predetermined extension rate. In detail, the image conversion unit 3 extends each strip portion so that, when a plurality of points are plotted in the strip portion, the X coordinate value of each point after the extension is the result of multiplying the X coordinate value of the point before the extension by the extension rate.

The image conversion unit 3 sets the extension rate so that the fingerprint portion of the input two-dimensional image assumes the target two-dimensional shape after the extension. In the example depicted in Fig. 8, the longest strip portion s14 is used as a reference strip portion, and the extension rate of s14 is set to 1.0. In other words, the strip portion s14 is unchanged. The image conversion unit 3 sets a higher extension rate for a strip portion that is, in the direction to the fingertip, farther from the strip portion (s14) longest in the X-axis direction. Regarding s11 to s14 in the example depicted in Fig. 8, the extension rate decreases in the order of s11, s12, s13, and s14. Note that the longest strip portion varies depending on the finger and is not necessarily the center portion, and so the reference strip portion varies depending on the finger.

The image conversion unit 3 may set a value that differs in the X-axis direction of the strip portion, as the extension rate. For example, a lower extension rate may be set in a center portion, i.e. a portion near the Z axis. A two-dimensional rolled fingerprint may have significant displacement or distortion in the side parts of the finger. Hence, by setting such an extension rate, the image conversion unit 3 can make the two-dimensionally converted fingerprint portion closer to the two-dimensional rolled fingerprint shape.

After the above-mentioned process, the image conversion unit 3 may cut the two-dimensional image substantially in parallel with the Z-axis direction to divide the image into a plurality of strip portions, thus extending the two-dimensional image not only in the X-axis direction but also in the Z-axis direction. Given that a typical two-dimensional rolled fingerprint is taken by rolling the finger only in the X-axis direction, however, the image conversion unit 3 preferably extends the two-dimensional image only in the X-axis direction, in order to shape the two-dimensional image closer to the two-dimensional rolled fingerprint shape.

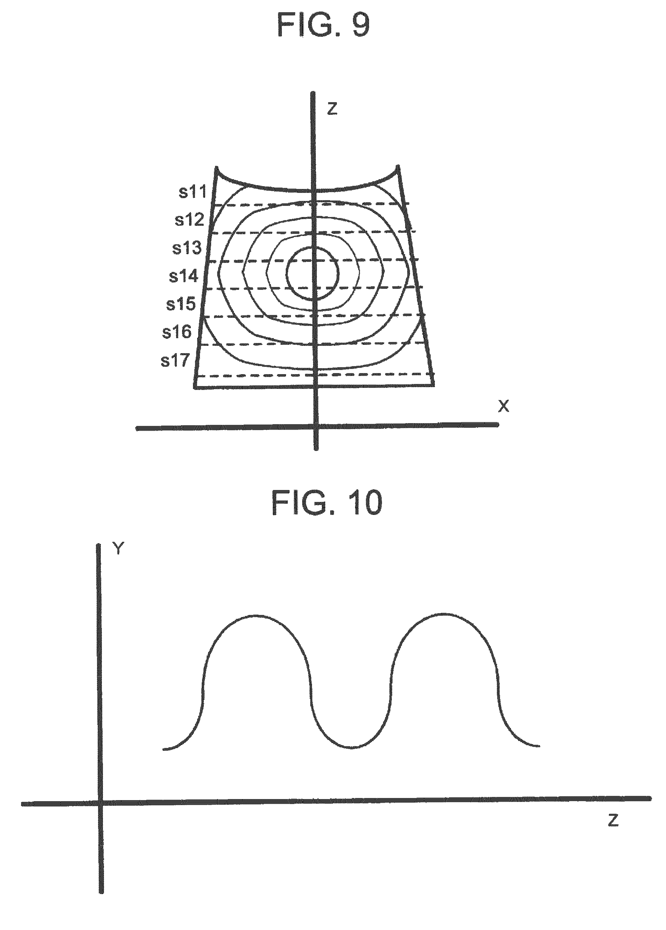

The target two-dimensional shape after the image spreading is not limited to a trapezoid, and may be any of various shapes such as a rectangle. For example, the target two-dimensional shape may be rectangular but concave around the center on the fingertip side. Fig. 9 is an explanatory diagram depicting a two-dimensional image of a shape that is concave around the center on the upper side. As depicted in Fig. 9, the image conversion unit 3 uses, for example, a shape in which the strip portion s11 nearest the fingertip is concave on the fingertip side. In detail, the image conversion unit 3 divides the strip portion s11 into strip portions substantially in parallel with the Z-axis direction. The image conversion unit 3 then contracts the strip portion so that the strip portion near the center is shortest and the strip portions near the right and left edges are longer. In either case, the image conversion unit 3 shapes the two-dimensional image closer to the two-dimensional rolled fingerprint shape used by the user of fingerprint authentication for operation.

In the fingerprint image conversion device in this exemplary embodiment, the image conversion unit 3 may, when generating the two-dimensional image, perform the image shaping process of making the image closer to the two-dimensional rolled fingerprint shape. For example, when two-dimensionally spreading the triangular mesh, the image conversion unit 3 may spread the three-dimensional image into a shape closer to the two-dimensional rolled fingerprint shape, using the above-mentioned extension rate. Alternatively, when projecting the three-dimensional image onto the figure to generate the two-dimensional image, the image conversion unit 3 may spread the three-dimensional image into a shape closer to the two-dimensional rolled fingerprint shape, using such a figure that assumes the two-dimensional rolled fingerprint shape when spread.

The unevenness image generation unit 5 shades the image output from the image conversion unit 3, based on the height of unevenness of the fingerprint portion in the three-dimensional shape (step S6). Fig. 10 is a partial sectional view of part of the fingerprint portion of the finger. In detail, Fig. 10 is a partial sectional view of the finger depicted in Fig. 3, in a plane including the Z axis and the Y axis. The unevenness image generation unit 5 determines the density of shading depending on the height of unevenness of the fingerprint portion of the finger from a reference point in the normal direction (the Y-axis direction in Fig. 10), and shades the image output from the image conversion unit 3 accordingly.

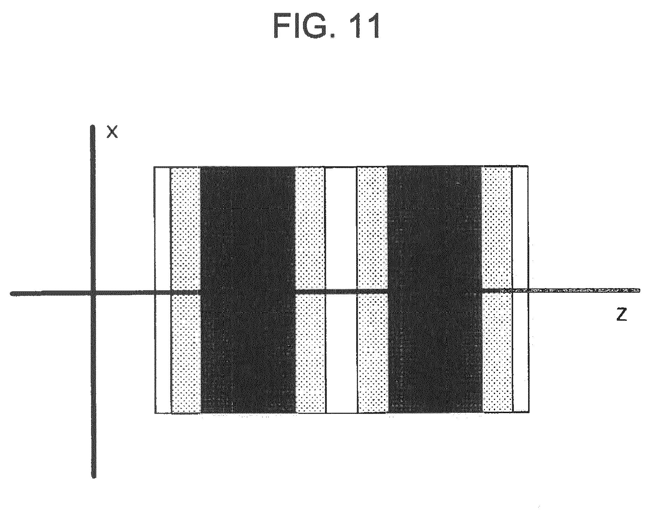

Fig. 11 is an explanatory diagram depicting part of the fingerprint of the shaded two-dimensional image. Fig. 11 corresponds to the sectional view in Fig. 10. As depicted in Fig. 11, the unevenness image generation unit 5 sets pixel values so that portions with high unevenness are dark in color and portions with low unevenness are light in color, as an example. This makes the fingerprint ridges clear. In the case where the two-dimensional image includes the texture, the unevenness image generation unit 5 can make the fingerprint ridges clear by, for example, enhance the texture values. In the case where the two-dimensional image includes both the three-dimensional coordinate values and the texture, the unevenness image generation unit 5 can make the fingerprint ridges clearer by combining the pixel values generated from the unevenness values and the texture values.

The fingerprint image conversion device in this exemplary embodiment converts a fingerprint taken as a three-dimensional image into a two-dimensional image. The fingerprint image conversion device in this exemplary embodiment can thus generate a two-dimensional image having no slippage or distortion, without the assistance of an expert skilled in two-dimensional rolled fingerprinting.

Moreover, the fingerprint image conversion device in this exemplary embodiment can shape the two-dimensional image into the same shape as a typical two-dimensional rolled fingerprint shape. This enables the user of fingerprint matching to compare fingerprints using a typical fingerprint authentication algorithm, with it being possible to perform accurate matching.

### Exemplary Embodiment 2

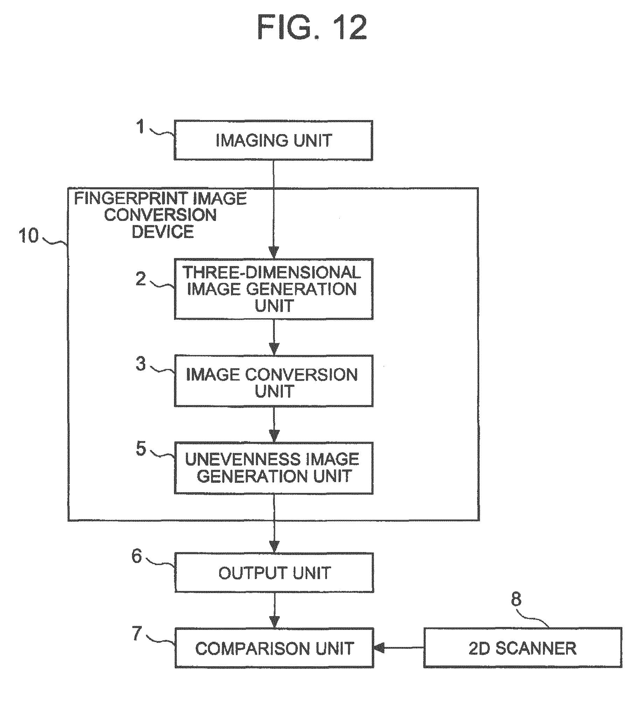

The following describes a fingerprint image conversion system in a second exemplary embodiment (Exemplary Embodiment 2), with reference to drawings. Fig. 12 is a block diagram depicting the structure of the second exemplary embodiment of the fingerprint image conversion system. As depicted in Fig. 12, the fingerprint image conversion device in this exemplary embodiment includes an imaging unit 1, a fingerprint image conversion device 10, an output unit 6, a comparison unit 7, and a 2D scanner 8. The fingerprint image conversion device 10 is the same as that in the first exemplary embodiment, and so its description is omitted. The comparison unit 7 is, for example, realized by an information processing device such as a CPU (Central Processing Unit) operating according to a program or hardware designed to perform specific computational processing and the like.

The imaging unit 1 is a typical 3D scanner. For example, the imaging unit 1 includes a plurality of 3D scanners, and captures an image of a finger from respective different directions, as depicted in Fig. 3. The imaging unit 1 also acquires three-dimensional image information including the three-dimensional coordinate information of the finger, the pixel value at each coordinate position, and the like.

The output unit 6 displays the two-dimensional image acquired from the unevenness image generation unit 5. The output unit 6 is a display device as an example, but may be any device capable of image display.

The 2D scanner 8 is a typical 2D scanner, and acquires an image of a two-dimensional rolled fingerprint (e.g. a left fingerprint).

The comparison unit 7 compares the two-dimensional image converted by the fingerprint image conversion device 10 and the image of the two-dimensional rolled fingerprint acquired by the 2D scanner 8 for comparison.

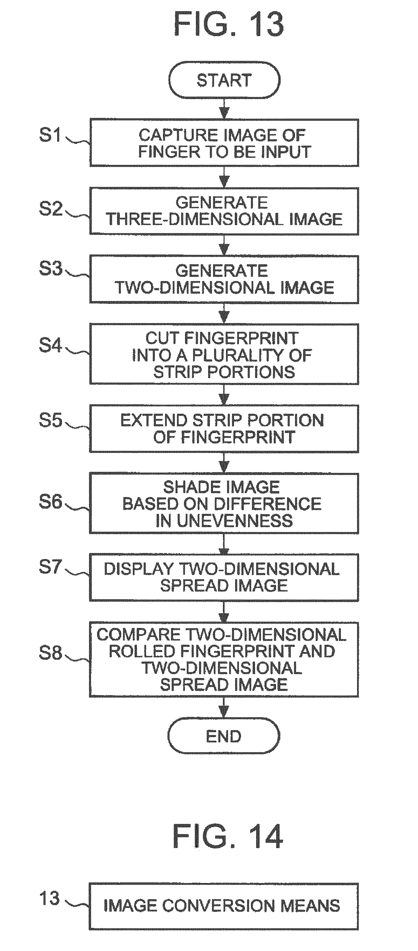

The following describes the operation of the fingerprint image conversion system in this exemplary embodiment. Fig. 13 is a flowchart depicting the operation of the second exemplary embodiment of the fingerprint image conversion system according to the present invention. Steps S2 to S6 are the same as those in the first exemplary embodiment, and so their description is omitted.

The imaging unit 1 captures, for example, an image of a finger to be input from a plurality of positions (step S1). The imaging unit 1 also acquires three-dimensional image information including the three-dimensional coordinate information of the finger, the pixel value at each coordinate position, and the like.

The output unit 6 displays the two-dimensional spread image acquired from the unevenness image generation unit 5 (step S7). The output unit 6 is a display device as an example, but may be any device capable of image display. The output to the display device may be made via a network. Moreover, the display device may display the two-dimensional spread image via a recording medium such as a hard disk. By the output unit 6 displaying the two-dimensional spread image, for example, the user of fingerprint authentication can reset the extension rate to make the two-dimensional spread image closer to the two-dimensional rolled fingerprint shape.

The comparison unit 7 compares the two-dimensional image converted by the fingerprint image conversion device 10 and the two-dimensional rolled fingerprint acquired by the 2D scanner 8 (step S8).

The fingerprint image conversion system in this exemplary embodiment compares the two-dimensional image shaped to be the same as the shape of the two-dimensional rolled fingerprint to be compared, with the two-dimensional rolled fingerprint. This enables the user of fingerprint matching to perform accurate matching.

Fig. 14 is a block diagram depicting the structure of a main part of a fingerprint image conversion device according to the present invention. As depicted in Fig. 14, the fingerprint image conversion device according to the present invention includes image conversion means 13 for acquiring a three-dimensional image of a finger, and converting the three-dimensional image into a two-dimensional image with a fingerprint portion of the finger being spread.

The following fingerprint image conversion device and fingerprint image conversion system in (1) to (7) are also disclosed in the foregoing exemplary embodiments.
(1) In the fingerprint image conversion device, the image conversion means (e.g. the image conversion unit 3) may set a first axis in a longitudinal direction of the finger, set a second axis orthogonal to the first axis, and extend the two-dimensional image in a direction of the second axis to shape the two-dimensional image into a two-dimensional image of a predetermined shape. Such a fingerprint image conversion device can make the two-dimensional image closer to a typical two-dimensional rolled fingerprint shape. This improves the work efficiency of the user of fingerprint matching.
(2) In the fingerprint image conversion device, the image conversion means may cut the two-dimensional image substantially in parallel with the direction of the second axis to divide the two-dimensional image into a plurality of strip portions, set an extension rate for each of the plurality of strip portions, and extend the strip portion so that a coordinate value in the direction of the second axis in the strip portion after the extension is a result of multiplying a coordinate value in the direction of the second axis in the strip portion before the extension by the extension rate. Such a fingerprint image conversion device sets each extension rate in the longitudinal direction of the finger, so that two-dimensional rolled fingerprints of various shapes can be handled.
(3) In the fingerprint image conversion device, the image conversion means may set a higher extension rate for a strip portion that is, in a direction to a fingertip, farther from a strip portion longest in the direction of the second axis. Since the three-dimensional image is thinner on the fingerprint side as compared with the two-dimensional rolled fingerprint, such a fingerprint image conversion device can shape the two-dimensional image closer to the typical two-dimensional rolled fingerprint shape.
(4) In the fingerprint image conversion device, the image conversion means may shape the two-dimensional image so that a side nearest a fingertip becomes to be concave. Such a fingerprint image conversion device can handle a two-dimensional rolled fingerprint of a shape in which the side nearest the fingertip becomes to be concave.
(5) In the fingerprint image conversion device, the image conversion means may convert the two-dimensional image into the two-dimensional image of the predetermined shape, when converting the three-dimensional image into the two-dimensional image with the fingerprint portion of the finger being spread.
(6) The fingerprint image conversion device may further include unevenness image generation means (e.g. the unevenness image generation unit 5) for shading the two-dimensional image based on a height of unevenness in a normal direction of the fingerprint portion. Such a fingerprint image conversion device can make the fingerprint ridges clear.
(7) A fingerprint image conversion system may include: the fingerprint image conversion device (e.g. the fingerprint image conversion device 10); output means (e.g. the output unit 6) for displaying the two-dimensional image obtained by the conversion; and comparison means (e.g. the comparison unit 7) for comparing the two-dimensional image with a two-dimensional fingerprint image to be compared. Such a fingerprint image conversion system enables the user of fingerprint authentication to compare the two-dimensional image shaped to be the same as the shape of the two-dimensional rolled fingerprint to be compared, with the two-dimensional rolled fingerprint. Accurate matching can be performed in this way.

This application claims priority based on Japanese Patent Application No. 2013-044210 filed on March 6, 2013, the disclosure of which is incorporated herein in its entirety.

Although the present invention has been described with reference to the foregoing exemplary embodiments, the present invention is not limited to the foregoing exemplary embodiments. Various changes understandable by those skilled in the art can be made to the structures and details of the present invention within the scope of the present invention.

### Industrial Applicability

The present invention is applicable to fingerprint matching in criminal investigations and the like.

### Reference Signs List

- 1: imaging unit
- 2: three-dimensional image generation unit
- 3: image conversion unit
- 5: unevenness image generation unit
- 6: output unit
- 7: comparison unit
- 8: 2D scanner
- 13: image conversion means

## Claims

1. A fingerprint image conversion device comprising
image conversion means for acquiring a three-dimensional image of a finger, and converting the three-dimensional image into a two-dimensional image with a fingerprint portion of the finger being spread.

2. The fingerprint image conversion device according to claim 1, wherein the image conversion means sets a first axis in a longitudinal direction of the finger, sets a second axis orthogonal to the first axis, and extends the two-dimensional image in a direction of the second axis to shape the two-dimensional image into a two-dimensional image of a predetermined shape.

3. The fingerprint image conversion device according to claim 2, wherein the image conversion means cuts the two-dimensional image substantially in parallel with the direction of the second axis to divide the two-dimensional image into a plurality of strip portions, sets an extension rate for each of the plurality of strip portions, and extends the strip portion so that a coordinate value in the direction of the second axis in the strip portion after the extension is a result of multiplying a coordinate value in the direction of the second axis in the strip portion before the extension by the extension rate.

4. The fingerprint image conversion device according to claim 3, wherein the image conversion means sets a higher extension rate for a strip portion that is, in a direction to a fingertip, farther from a strip portion longest in the direction of the second axis.

5. The fingerprint image conversion device according to any one of claims 2 to 4, wherein the image conversion means shapes the two-dimensional image so that a side nearest a fingertip becomes to be concave.

6. The fingerprint image conversion device according to any one of claims 2 to 5, wherein the image conversion means converts the two-dimensional image into the two-dimensional image of the predetermined shape, when converting the three-dimensional image into the two-dimensional image with the fingerprint portion of the finger being spread.

7. The fingerprint image conversion device according to any one of claims 1 to 6, comprising
unevenness image generation means for shading the two-dimensional image based on a height of unevenness in a normal direction of the fingerprint portion.

8. A fingerprint image conversion system comprising:
the fingerprint image conversion device according to any one of claims 1 to 7;
output means for displaying the two-dimensional image obtained by the conversion; and
comparison means for comparing the two-dimensional image with a two-dimensional fingerprint image to be compared.

9. A fingerprint image conversion method comprising
acquiring a three-dimensional image of a finger, and converting the three-dimensional image into a two-dimensional image with a fingerprint portion of the finger being spread.

10. The fingerprint image conversion method according to claim 9, comprising
setting a first axis in a longitudinal direction of the finger, setting a second axis orthogonal to the first axis, and extending the two-dimensional image in a direction of the second axis to shape the two-dimensional image into a two-dimensional image of a predetermined shape.

11. A fingerprint image conversion program for causing a computer to execute
an image conversion process of acquiring a three-dimensional image of a finger, and converting the three-dimensional image into a two-dimensional image with a fingerprint portion of the finger being spread.

12. The fingerprint image conversion program according to claim 11, causing the computer to execute, in the image conversion process,
a process of setting a first axis in a longitudinal direction of the finger, setting a second axis orthogonal to the first axis, and extending the two-dimensional image in a direction of the second axis to shape the two-dimensional image into a two-dimensional image of a predetermined shape.
